(19) Europäisches Patentamt
European Patent Office
Office européen des brevets

(11) **EP 4 404 103 A1**

(12) **EUROPEAN PATENT APPLICATION**

(43) Date of publication:
**24.07.2024 Bulletin 2024/30**

(21) Application number: **24152922.1**

(22) Date of filing: **19.01.2024**

(51) International Patent Classification (IPC):
**G06N 3/063** (2023.01)       **G06N 3/092** (2023.01)
**G06N 20/00** (2019.01)

(52) Cooperative Patent Classification (CPC):
**G06N 3/063; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2023 KR 20230008105**

(71) Applicants:
• **Samsung Electronics Co., Ltd.**
  **Suwon-si, Gyeonggi-do 16677 (KR)**

• **Korea University Research and Business Foundation**
  **Seoul (KR)**

(72) Inventors:
• **CHUNG, Sungwoo**
  **Seoul (KR)**
• **KIM, Younggeun**
  **Seoul (KR)**
• **CHOI, Seunghun**
  **Seoul (KR)**

(74) Representative: **Marks & Clerk LLP**
  **15 Fetter Lane**
  **London EC4A 1BW (GB)**

(54) **SYSTEM FOR ALLOCATING DEEP NEURAL NETWORK TO PROCESSING UNIT BASED ON REINFORCEMENT LEARNING AND OPERATION METHOD OF THE SYSTEM**

(57)    Provided is a system configured to respectively allocate a plurality of deep neural networks to a plurality of processing units according to a particular action having maximum quality in a particular state. In addition, provided is a system configured to respectively allocate a plurality of deep neural networks to a plurality of processing units according to an action having maximum quality in a current state, and to update quality of an action selected in the current state by using a calculated reward based on a process of the plurality of deep neural networks by the allocated plurality of processing units.

FIG. 5

**Description**

BACKGROUND

The inventive concepts relate to a system for allocating a deep neural network (DNN) to a processing unit based on reinforcement learning and an operation method of the system. More particularly, the inventive concepts relate to a system for efficiently and respectively allocating a plurality of DNNs to a plurality of processing units based on reinforcement learning.

Advances in DNN algorithms provide various intelligent services (for example, virtual assistant, face/image recognition, language translation, live video analysis, and augmented reality/virtual reality (AR/VR)), and the like. Multiple DNNs may be used for intelligent services having complex functions. For example, for an AR application, multiple DNNs including object detection DNN, image classification DNN, and pause estimation DNN can be used. Depending on the desired intelligent service, various DNNs may be utilized for workloads of the multiple DNNs.

DNN processing can be performed at a centralized data center due to its computational and memory-intensive nature. Alternatively, the DNN processing can be performed on mobile devices to improve response time by reducing network latency, reduce the communication burden with centralized servers, and prevent personal information leakage during communication.

The DNN processing may be performed by a processing unit, such as a central processing unit (CPU), a graphics processing unit (GPU), a neural processing unit (NPU), and/or the like. The demand for efficient processing of intelligent services having complex functions causes a problem of allocating a plurality of DNNs to a plurality of processing units.

SUMMARY

The inventive concepts provides a method of efficiently and respectively allocating a plurality of deep neural networks (DNNs) to a plurality of processing units based on reinforcement learning.

The inventive concepts provide a system for allocating DNNs to the processing units based on reinforcement learning. Specific embodiments allocate DNNs to processing units based on an action-selection model learnt through reinforcement learning, wherein rewards incentivize allocations that reduce one or more of energy consumption by the processing units, temperature of the processing units or processing time for implementing a process of the plurality of the DNNs, and/or increase accuracy of the process of the plurality of DNNs. Accordingly, the embodiments described herein provide systems and methods for more efficiently allocating DNNs to processing units for improved performance.

According to an embodiment, the system includes a memory configured to store one or more instructions; and the plurality of processors, wherein at least one processor of the plurality of processors, by performing the one or more instructions, is configured to: select a current state from a plurality of preset states, the current state corresponding to a state of the system and to a plurality of preset actions having at least one preset quality, select an action, of the plurality of preset actions, having a maximum quality in the current state and respectively allocate a plurality of deep neural networks (DNNs) to the plurality of processors based on the selected action, determine a reward based on whether a process of the plurality of DNNS by the allocated plurality of processors satisfies preset constraints, and update the at least one preset quality of the action selected in the current state based on the reward.

The inventive concepts provide a system for allocating DNNs to processing units based on reinforcement learning.

According to an embodiment, the system includes a memory configured to store one or more instructions; and a plurality of processing units, wherein at least one processor, of the plurality of processing units, by executing the one or more instructions, is configured to select a particular state from a plurality of preset states, the particular state corresponding to a state of the system and to a plurality of preset actions having at least one preset quality, select a particular action, of the plurality of preset actions, having a maximum quality in the particular state, and respectively allocate a plurality of deep neural networks to the plurality of processors based on the selection of the particular action.

The inventive concepts provide an operation method for allocating DNNs to processing units based on reinforcement learning.

According to an embodiment, the operation method of the system includes selecting a particular state from a plurality of preset states, the particular state corresponding to a state of a system and to a plurality of preset actions having at least one preset quality; selecting a particular action, from the plurality of preset actions, having a maximum quality in the particular state; and respectively allocating a plurality of DNNs to a plurality of processors based on the selection of the particular action.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 is a diagram of a plurality of deep neural networks (DNNs), according to at least one embodiment;
FIG. 2 is a diagram of Q-learning according to at least one embodiment;
FIG. 3 is a diagram of a Q-table according to at least one embodiment;
FIG. 4 is a diagram of a system according to at least one embodiment;
FIG. 5 is a diagram describing a learning method of respectively allocating a plurality of DNNs to a plurality of processing units, according to at least one embodiment;
FIG. 6 is a diagram describing a method of respectively allocating a plurality of DNNs to a plurality of processing units, according to at least one embodiment;
FIG. 7 is a table describing features for states according to at least one embodiment;
FIGS. 8 and 9 are tables describing states according to embodiments;
FIGS. 10 and 11 are tables describing actions according to embodiments;
FIG. 12 is a diagram describing compensation according to at least one embodiment;
FIGS. 13 and 14 are flowcharts of learning methods of a system for allocating DNNs to processing units based on reinforcement learning, according to embodiments;
FIGS. 15 and 16 are flowcharts of operating methods of a system for allocating DNNs to processing units based on reinforcement learning, according to embodiments; and
FIG. 17 illustrates graphs of performance of a process, according to at least one embodiment.

DETAILED DESCRIPTION OF THE EMBODIMENTS

Hereinafter, various embodiments of the inventive concepts are described in conjunction with the accompanying drawings. As used herein, each of such phrases as "A or B", "at least one of A and B", "at least one of A or B", "A, B, or C", "at least one of A, B, and C", and "at least one of A, B, or C", may include any one of possible combinations of the items enumerated together in a corresponding one of the phrases. Accordingly, the phrases "at least one of A, B, and C", and "at least one of A, B, or C", may cover the following options: "A only", "B only", "A and B", and "A, B and C".

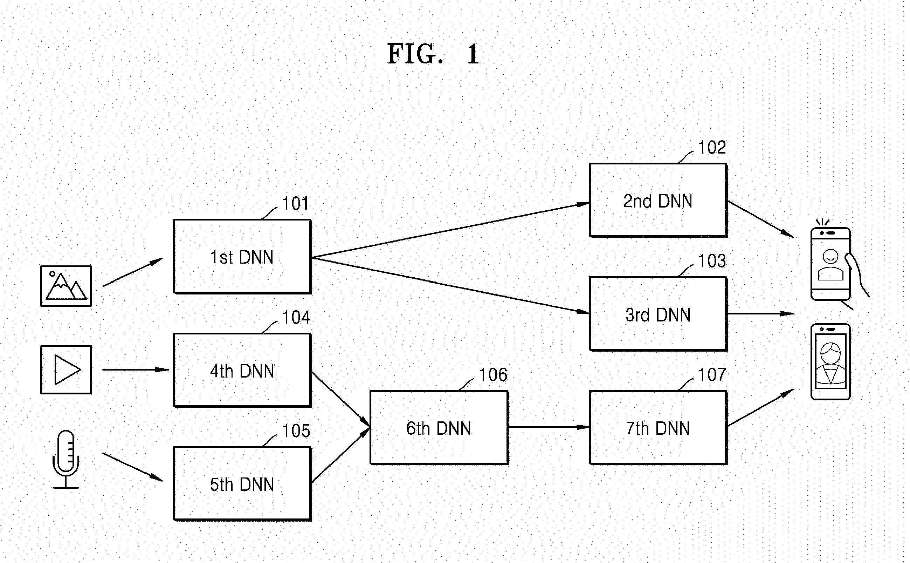

FIG. 1 is a diagram of a plurality of deep neural networks (DNNs), according to at least one embodiment.
A DNN may include a neural network based on deep learning in the artificial intelligence (AI) field. A DNN may comprise a plurality of interconnected nodes. A DNN may comprise a plurality of layers, wherein each layer comprises a plurality of nodes. A DNN may be configured to perform a calculation (e.g. make a prediction) based on input data by feeding the input data into an input layer. The each node may perform a calculation based on information passed to it from earlier nodes. Through this mechanism, calculations may be performed across the nodes, resulting in an output. The DNN may include a convolution neural network (CNN), a recurrent neural network (RNN), a generative adversarial network (GAN), and/or the like. For example, the DNN may include at least one of LeNet, AlexNet, VGGNet, U-Net, residual neural network (ResNet), GoogleNet, ENet, and/or the like. In at least one embodiment, the type of DNN is not limited to the listed examples, and various types of DNNs may be used. Each of the plurality of DNN may be included in a processing unit, and/or a processing unit may comprise a sub-set of the plurality of DNN. For example, the plurality of DNN may be included in one or more processing units.
In at least one embodiment, a plurality of DNNs may include first through seventh DNNs 101 to 107. For example, the number of DNNs included in the plurality of DNNs is not limited thereto, and may be two or more.
The plurality of DNNs 101 to 107 may include different types of DNNs. Alternatively, at least two of the plurality of DNNs 101 to 107 may include the same type of DNN. For example, the second DNN 102 may include a U-Net-based CNN, the third DNN 103 may include a ResNet-based CNN, and the sixth DNN 106 may include an RNN.
The plurality of DNNs 101 through 107 may perform different functions. Alternatively, at least two of the plurality of DNNs 101 through 107 may perform the same function. For example, the first DNN 101 may perform object detection, the second DNN 102 may perform image classification, the third DNN 103 may perform face recognition, the fourth DNN 104 may convert voice into text, the fifth DNN 105 may convert an image into text, the sixth DNN 106 may perform language translation, the seventh DNN 107 may convert text into speech, and/or the like. However, in the example embodiments, the function of the DNN is not limited to the listed examples, and various functions of DNNs may be used, omitted, and/or added.
The plurality of DNNs may include one or more multiple DNNs (e.g. DNN groups or combiantions). Herein, a multiple DNN comprises a combination of DNNs linked in series and configured to obtain output data from input data. For example, when input data is processed by the first DNN 101 and the second DNN 102 to obtain first output data and input data is processed by the first DNN 101 and the third DNN 103 to obtain second output data, the first through third DNNs 101 through 103 may constitute a multiple DNN (e.g. a DNN group or combination). For example, when the first input data is processed by the fourth DNN 104, the sixth DNN 106, and the seventh DNN 107 to obtain output data and the second input data is processed by the fifth DNN 105, the sixth DNN 106, and the seventh DNN 107 to obtain output data, the fourth through seventh DNNs 104 through 107 may constitute a multiple DNN (e.g. a DNN group or combination).

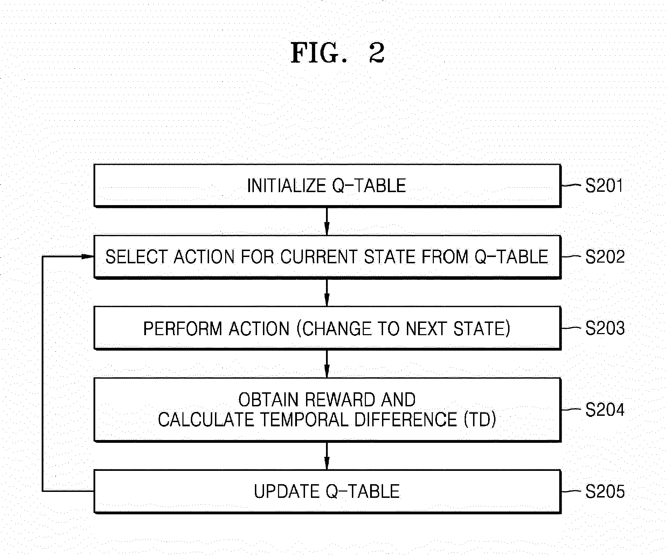

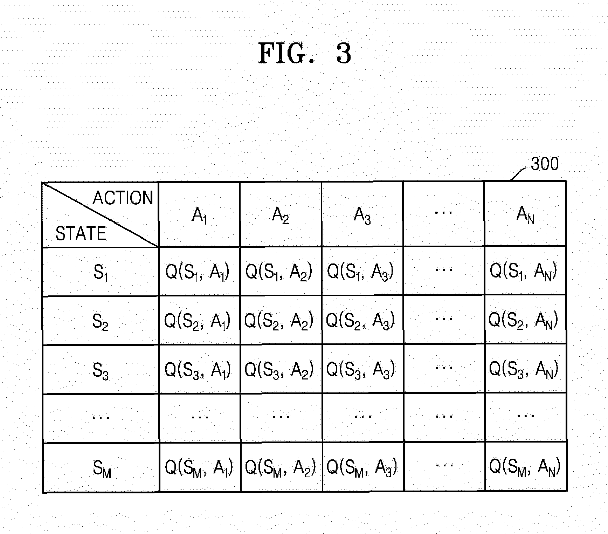

FIG. 2 is a diagram of Q-learning according to at least one embodiment. FIG. 3 is a diagram of a Q-table according to at least one embodiment.

The reinforcement learning is one type of machine learning. In the reinforcement learning, an agent seeks a policy for maximizing a reward. Q-learning, as a type of reinforcement learning, is performed in model-free environments. In other words, the agent does not want to learn about the underlying mathematical models, but attempts to construct an optimal policy by interacting with the environment. The agent repeatedly tries various approaches to solve problems, learn about the environment, and continuously update policies.

Referring to FIGS. 2 and 3, in operation S201, the agent may initialize a Q-table 300. The Q-table 300 represents a policy on how to act in an environment. A Q-value indicates the quality of an action. The Q-table 300 includes states and Q-values for actions. That is, the Q-table 300 includes Q-values for particular combinations of states and actions. For example, $Q(S_1, A_1)$ of the Q-table 300 respectively represents the quality of a first action $A_1$ taken in a first state $S_1$. The Q-table 300 may be initialized with any values (e.g. random or preselected values).

In operation S202, the agent may select an action for a current state from the Q-table 300. The agent may select an action for the largest Q-value in the current state. That is, the agent may select an action having the largest Q-value in the current state according to the Q-table. When the current state is $S_i$, the agent may select $A_j$ having the largest Q-value from $Q(S_i, A_1)$, $Q(S_i, A_2)$, ..., $Q(S_i, Arr)$. For example, when the current state is $S_3$ and $Q(S_3, A_2)$ is the largest among $Q(S_3, A_1)$, $Q(S_3, A_2)$, ..., $Q(S_3, A_N)$, the agent may select $A_2$. Alternatively, the agent may select an action based on an algorithm for exploration.

In operation S203, the agent may perform an action. In other words, the agent may perform the action selected in operation S202. The current state may be switched to a next state by the action performed by the agent.

In operation S204, the agent may obtain a reward, and calculate a temporal difference (TD). The TD may indicate how much the Q-value for the action taken in the previous state (that is, the current state before having been switched to the next state) is required to be changed. The TD may be calculated by using Equation 1.

[Equation 1]

$$\text{TD}(S, A) = \text{R} + \gamma \max_{A'} Q(S', A') - Q(S, A)$$

In Equation 1, R indicates a reward obtained by the action taken in the previous state, $\gamma$ indicates a discount factor having a value between 0 and 1, $\max_{A'} Q(S', A')$ indicates the largest Q-value, which any action may take in the current state, and Q(S, A) indicates the Q-value for the action taken in the previous state. In the notation of equation 1, $S$ represents the previous state, $A$ represents the previous action, $S'$ represents the current state and $A'$ represents the current action.

In operation S205, the agent may update the Q-table 300.

The agent may update the Q-table 300 by using Equation 2.

[Equation 2]

$$Q(S, A) = Q(S, A) + \alpha \cdot \text{TD}(S, A)$$

In Equation 2, $\alpha$ represents a learning rate having a value between 0 and 1. On the left side of Equation 2, Q(S, A) represents the updated Q-value. The right side of Equation 2 represents values before the update. On the right side of Equation 2, Q(S, A) represents the Q-value for the action taken in the previous state, and TD(S, A) represents the TD for the action taken in the previous state.

The agent may update the Q-table by repeating operations S202 through S205. The Q-table updated in operation S205 may be used as a Q-table for the current state in operation S202. The agent may repeat operations S202 through S205 until the final state is reached or preset conditions are satisfied.

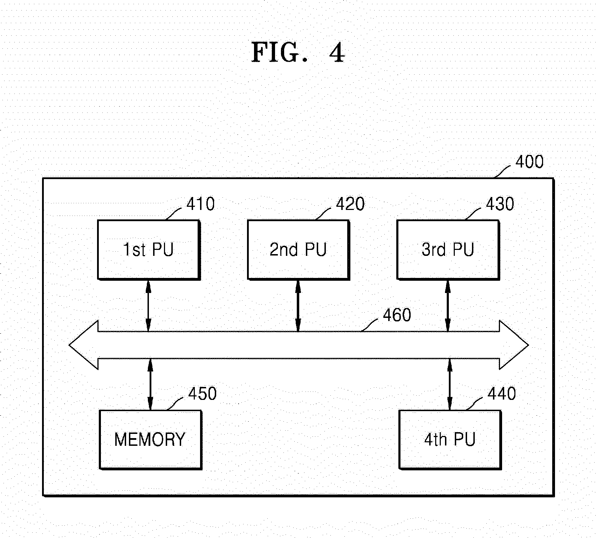

FIG. 4 is a diagram of a system 400 according to at least one embodiment.

The system 400 may include a memory 450 configured to store one or more instructions, a plurality of processing units 410 through 440, and a bus 460 for data transmission between the memory 450 and the plurality of processing units .

The memory 450 may include a volatile memory, such as dynamic RAM (DRAM) and static RAM (SRAM), or a non-volatile memory, such as flash memory, phase change RAM (PRAM), magnetic RAM (MRAM), resistant RAM (ReRAM), and ferroelectric RAM (FRAM).

The processing unit may be referred to a processor, and include a processing unit (or a processor) configured to process the DNN. The processing unit may include, for example, a core of a central processing unit (CPU), a graphics processing unit (GPU), a neural processing unit (NPU), a digital signal processor (DSP), or a multi-core processor but is not limited thereto.

FIG. 4 illustrates that the system 400 includes four processing units (PU) 410-440, but the number of processing units in the system 400 is not limited thereto. The types of the plurality of processing units may be the same as and/or different from each other. For example, the plurality of processing units may include a CPU 410, a GPU 420, an NPU 430, and a DSP 440, may include a CPU 410, two GPUs 420, 430, and a NPU 440; and/or the like.

The system 400 is configured to perform learning and/or an operation for allocating a plurality of DNNs to the plurality of processing units based on the reinforcement learning. In addition, the system 400 is configured to process the plurality of DNNs respectively allocated to the plurality of processing units. To this end, the system 400 may further include components not illustrated in FIG. 4. For example, the system 400 may further include a power management unit (PMU), a clock management unit (CMU), a system bus, a universal serial bus (USB), a peripheral component interface (PCI), a wired interface, a wireless interface, firmware, an operating system (OS), embedded software, codec, a video module (for example, a camera interface), a joint photographic experts group (JPEG) processor, a video processor, a mixer, a 3-dimensional (3D) graphics core, an audio system, a driver, and/or the like; but is not limited thereto.

The system 400 may include (and/or be included in) a system-on-chip, in which blocks having various functions are integrated into a single semiconductor chip. The system 400 may be mounted on an electronic device, and the electronic device may include, for example, a mobile device, such as a smartphone, a tablet personal computer (PC), a mobile phone, a personal digital assistant (PDA), a laptop, a wearable device, a global positioning system (GPS) device, an e-book terminal, a digital broadcasting terminal, an MP3 player, a digital camera, a wearable computer, and/or the like. For example, the electronic device may also include an internet of things (IoT) device or an electric vehicle.

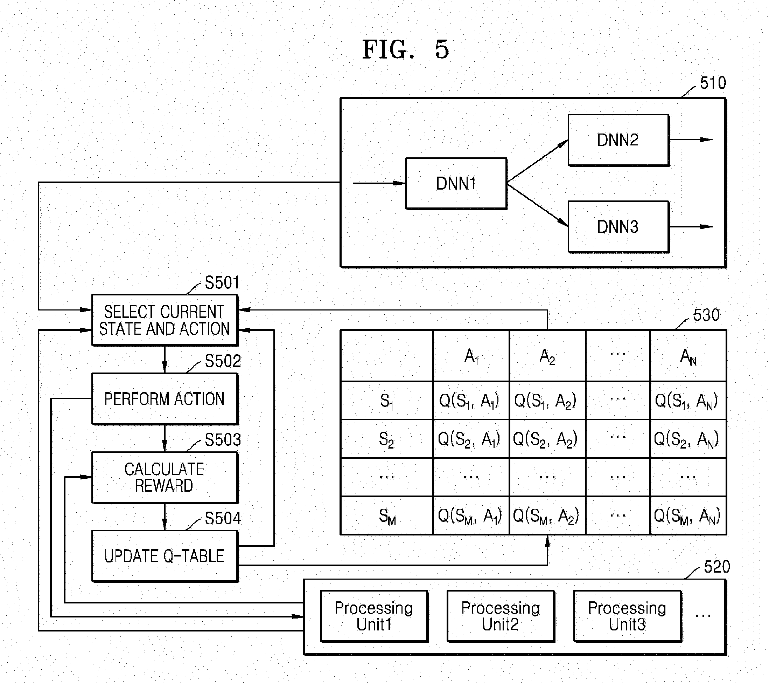

FIG. 5 is a diagram describing a learning method for respectively allocating a plurality of DNNs to a plurality of processing units, according to at least one embodiment.

Optimally and respectively allocating a plurality of DNNs to a plurality of processing units is a complicated issue. The reason is because there are many conditions to consider, such as utilization of each processing unit, temperature, process time, process accuracy, energy consumption, and memory access competition of a plurality of processing units.

The present disclosure describes learning to respectively allocate a plurality of DNNs to a plurality of processing units based on the system 400 of embodiments with reference to FIG. 4. Learning for allocation may be based on reinforcement learning. The learning for allocation may be based on Q-learning.

Referring to FIG. 5, at least one processing unit (hereinafter, referred to as a processing unit) of the plurality of processing units 410-440 of the system 400 may, as an agent, perform operations S501 through S504 illustrated in FIG. 5. For example, the processing unit may include a CPU but is not limited thereto. The processing unit acting as the agent may also be referred to as a controller.

In operation S501, the processing unit selects the current state, and selects an action to be performed in the current state.

For example, the processing unit may receive information about a plurality of DNNs 510 and/or information about a plurality of processing units 520 to select the current state. The plurality of DNNs 510 may include DNNs, which are subject to processing of the system 400. For example, the plurality of DNNs 510 may include at least one multiple DNN (e.g. at least one group or combination of DNNs) but are not limited thereto. The plurality of processing units 520 may include the plurality of processing units 410-440 in FIG. 4.

Information about the plurality of DNNs 510 may include at least one of the number of DNNs, types of DNNs, the number of operations thereof, and the number of DNNs including more operations than a preset number of operations. The operation may mean one of a multiplication operation, an accumulation operation, and a multiplication-accumulation (MAC) operation. The DNN including a larger number of operations than a preset number may mean a heavy DNN having a large amount of operations. For example, the preset number may be thousands but is not limited thereto. The number of operations included in a known type of DNN, such as ResNet-50, is known information. That is, it may be possible to derive the number of operations from the type of the DNN. Accordingly, the type of DNN may include information that may replace the number of operations of the DNN.

The information about the plurality of processing units 520 may include at least one of the number of the processing units, types of the processing units, temperature (on-chip temperature) of the processing units, utilization of the processing units, and/or the like. Corresponding information (e.g. temperature information, utilization information, type information, etc.) may be provided for one or more of the processing units (e.g. for each of the processing units). The temperature of one or more of the processing units (e.g. each of the processing units) may include an average temperature, a maximum temperature, a minimum temperature, and/or an instantaneous temperature. The utilization of one or more of the processing units (e.g. each of the processing units) may be an average utilization, a maximum utilization, a minimum utilization, and/or an instantaneous utilization.

The processing unit may receive information about a memory to select the current state. The memory may include memory accessed by the plurality of processing units 520 to process the plurality of DNNs 510. For example, the memory may include the memory 450 in FIG. 4. Information about the memory may include information about the utilization of the memory. The utilization of the memory may be an average utilization, a maximum utilization, a minimum utilization, or an instantaneous utilization of the memory.

The processing unit may select the current state corresponding to the state of the system 400 from a plurality of preset states. The state of the system 400 may be determined by information about the plurality of processing units 520 and/or information about the memory received by the processing unit. Accordingly, the processing unit may select the current state corresponding to at least one of the utilization and temperature of each of the plurality of processing units 520. In addition, the processing unit may select the current state corresponding to the utilization of the memory.

The processing unit may select the current state corresponding to information about the plurality of DNNs 510 from the plurality of preset states. Accordingly, the processing unit may select the current state corresponding to the number of the plurality of DNNs 510. In addition, the processing unit may select the current state corresponding to the number of heavy DNNs included in the plurality of DNNs 510.

The processing unit may select an action having the maximum quality in the current state from preset actions. To this end, the processing unit may select an action having the maximum Q-value in the current state by using a Q-table 530. For example, when the current state is selected as $S_2$ and $Q(S_2, A_1)$ is the largest among $Q(S_2, A_1)$, $Q(S_2, A_2)$, ..., $Q(S_2, A_N)$, $A_1$ may be selected as the action. Therefore, the current state and/or action may be selected without human intervention and/or supervision.

Alternatively, the processing unit may select an action based on an algorithm in the current state. The algorithm may include an algorithm for performing an exploration without limiting the action of the processing unit in the exploitation. That is, the algorithm may select actions that aim to explore, rather than exploit previously learned information (e.g. rather than select actions according to the Q-values). Exploration actions may be selected independently of the Q-values (e.g. selected randomly). The algorithm may choose to explore or exploit depending on an exploration probability (e.g. epsilon). For example, the algorithm may include an epsilon ($\varepsilon$)-greedy algorithm but is not limited thereto.

In operation S502, the processing unit performs an action selected in the current state.

The action may include respective allocation of the plurality of DNNs 510 to the plurality of processing units 520 in a preset combination. In addition, the action may include setting the frequency or voltage of each of the plurality of processing units 520 with preset values.

As the action is performed, the plurality of processing units 520 may process the allocated plurality of DNNs 510. In addition, the plurality of processing units 520 may process the allocated plurality of DNNs 510 at a set frequency or voltage.

In operation S503, the processing unit calculates a reward for the performed action.

The reward may be calculated based on whether the process of the plurality of DNNs 510 according to the action selected in the current state has been performed to satisfy preset constraints. In at least some embodiments, the preset constraints are determined by conditions for efficiently and respectively allocating the plurality of DNNs 510 to the plurality of processing units 520. The preset constraints may include at least one of the time and accuracy of the process of the plurality of DNNs 510 according to the action selected in the current state, and the temperature and energy consumption of the plurality of processing units 520 during the runtime of the process.

The processing unit may collect information about the plurality of processing units 520 during the runtime of the process to determine whether the process of the plurality of DNNs 510 according to the action selected in the current state has been performed to satisfy preset constraints.

For example, the processing unit may calculate the reward in a manner that the reward is dependent on at least one of the time and accuracy of the process of the plurality of DNNs 510 according to the action selected in the current state, and the temperature and the energy consumption of each of the plurality of processing units 520 during the runtime of the process. For example, the processing unit may calculate a lower reward for a longer time of the process, a higher reward for higher accuracy of the process, a lower reward for higher temperature of each of the plurality of processing units 520 during the runtime of the process, and/or a lower reward for higher energy consumption of the plurality of processing units 520 during the runtime of the process. That is, the reward may decrease as the processing time increases, increase as the accuracy of the process increases, decrease as the temperature of each of the plurality of processing units during runtime of the process increases, and/or decrease as the energy consumption of the plurality of processing units 520 during the runtime of the process increases.

In operation S504, the processing unit may update the Q-table 530.

The processing unit may update the Q-table 530 by updating the Q-value for the action selected in the current state. For example, when the current state is $S_2$ and the selected action is $A_1$, the Q-table 530 may be updated by

updating Q (S$_2$, A$_1$). Examples described with reference to FIGS. 2 and 3 may be used for updating the Q-table 530.

The state of the system may be changed as the process of the plurality of DNNs 510 is performed according to the action selected in the current state. The processing unit may collect changed information about the plurality of processing units 520 and changed information about the memory thereof, to select the next state corresponding to the changed state of the system. With the transition of the state, the processing unit may repeatedly perform operations S501 through S504.

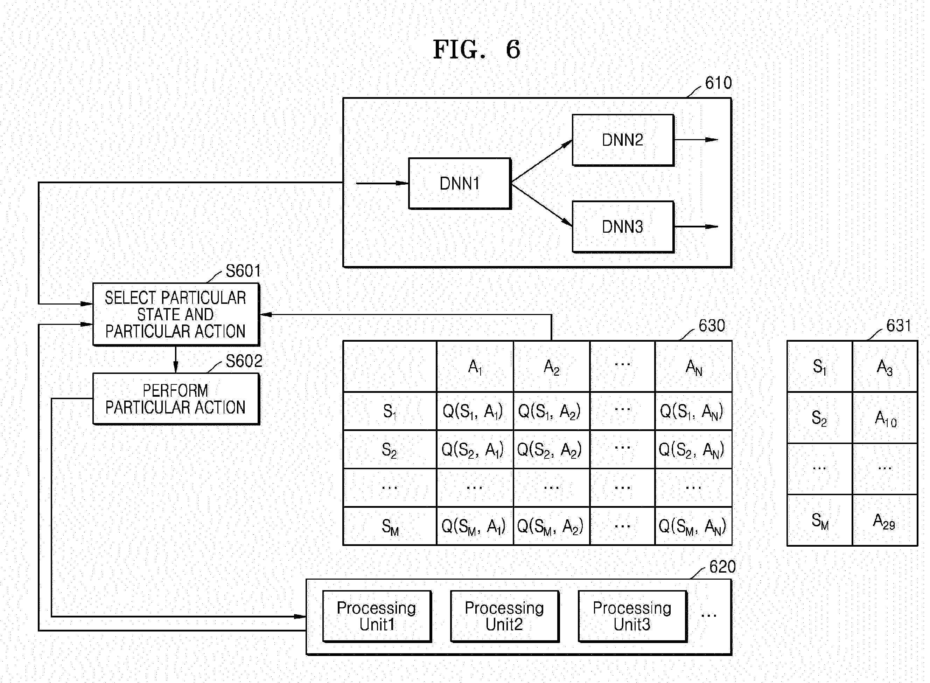

FIG. 6 is a diagram describing a method of respectively allocating the plurality of DNNs to the plurality of processing units, according to at least one embodiment.

A Q-table 630 may be obtained from the learning described with reference to FIG. 5. In the learning, as the time and accuracy of the process and the temperature and energy consumption of the processing unit are reflected in the reward, the Q-table 630 may provide an efficient policy for allocating a plurality of DNNs 610 to a plurality of processing units 620.

In operation S601, the processing unit selects a particular state, and selects a particular action to be performed in the particular state. In operation S601, descriptions of operation S501 given with reference to FIG. 5 may be applied. However, in operation S601, the Q-table 630, in which the learning has been completed, may be used for selection of the particular action.

In operation S602, the processing unit performs the particular action selected in the particular state. In operation S602, descriptions of operation S502 given with reference to FIG. 5 may be applied.

Whilst embodiments described herein select an action for a given state that has the maximum Q-value according to the Q-table 630, in alternative embodiment the Q-table 630 in FIG. 6 may be replaced with data including information about preset states and actions having maximum quality in the preset states. That is, after training, for each state, the action that has the maximum Q-value for the state may be identified from the Q-table, and set as a predefined action for that state. During implementation, for a given state, the corresponding predefined action may be selected. For example, when the preset states are S$_1$ through S$_M$, the action having the largest Q-value in S$_1$ is A$_3$, the action having the largest Q-value in S$_2$ is A$_{10}$, and the action having the largest Q-value in S$_M$ is A$_{29}$, the data may be expressed as shown in a table 631 illustrated in FIG. 6 but is not limited thereto.

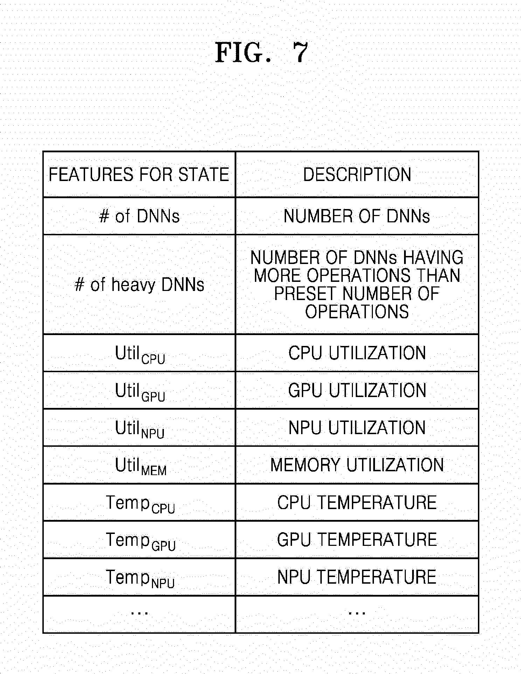

FIG. 7 is a table describing features for states according to at least one embodiment.

The preset states may be determined by features for describing the environment in relation to allocating the plurality of DNNs to the plurality of processing units. FIG. 7 illustrates various features according to at least one embodiment.

As a first feature, the number of DNNs (# of DNNs) may be used to determine the state. The number of DNNs may be used to consider various DNNs as well as particular DNNs.

As a second feature, the number of DNNs having more operations than a preset number of operations (that is, # of heavy DNNs) may be used to determine the state. Because the process of heavy DNNs requires a large amount of resources, efficient distribution of resources may be induced, as the "# of heavy DNNs" is used as an independent feature of the "# of DNNs".

As a third feature, the utilization of each of the plurality of processing units may be used to determine the state. FIG. 7 lists a CPU utilization Util$_{CPU}$, a GPU utilization Util$_{GPU}$, and an NPU utilization Util$_{NPU}$ but is not limited thereto, and the utilization of each of the plurality of processing units included in the system may be used as a feature. By making use of processing unit utilization, the method may efficiently distribute resources to balance workload.

As a fourth feature, the utilization of the memory Util$_{MEM}$ may be used to determine the state. Accordingly, efficient use of memory bandwidth may be induced in the process of the plurality of DNNs by the plurality of processing units.

As a fifth feature, the temperature of each of the plurality of processing units may be used to determine the state. By considering on-chip temperature, overheating of the plurality of processing units may be prevented. FIG. 7 lists a CPU temperature Temp$_{CPU}$, a GPU temperature Temp$_{GPU}$, and an NPU temperature Temp$_{NPU}$ but is not limited thereto, and the temperature of each of the plurality of processing units included in the system may be used as a feature.

In the example embodiments, features are not limited to the listed embodiments, and various features describing the environment in relation to allocating the plurality of DNNs to the plurality of processing units may be used.

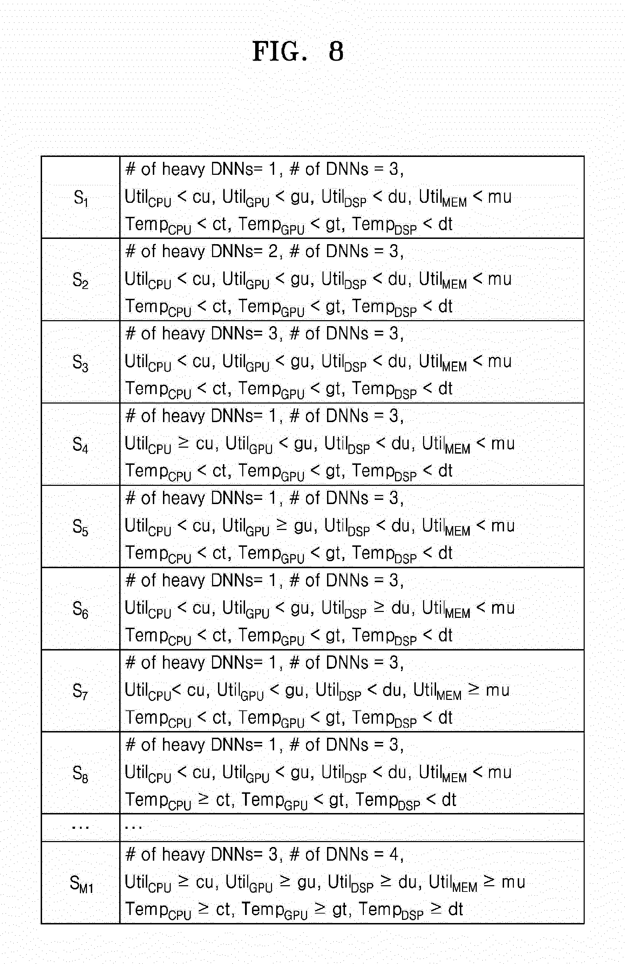

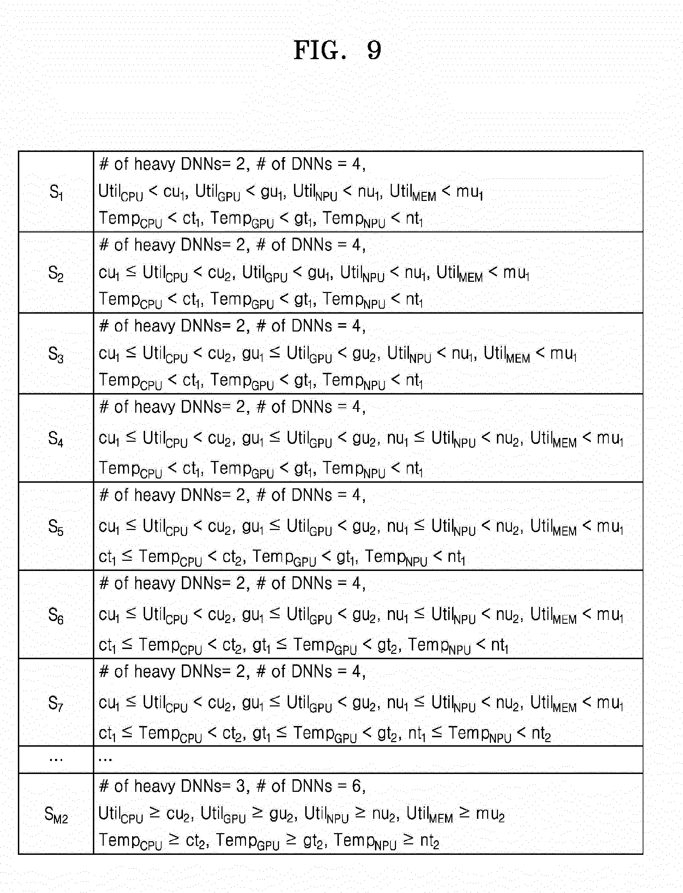

FIGS. 8 and 9 are tables describing states according to embodiments.

In the issue of allocating the plurality of DNNs to the plurality of processing units, the environment to be considered is complicated. Each manufacturer has a different hardware configuration of the processing unit, and changes in the states of the plurality of processing units during the runtime are different. In addition, modeling the environment of the plurality of processing units sharing resources is a difficult task.

In the inventive concepts, the embodiments for respectively allocating the plurality of DNNs to the plurality of processing units may use a finite number of preset states. The plurality of preset states may each cover a different position or range across feature space (e.g. a combination of ranges of features). Each of the dimensions of feature space (each of the parameters) may be split into different ranges, and different combinations of ranges may be allocated to different states. Each range may include a plurality of values, or a single value. The plurality of preset states may cover the entire range of at least one of the utilization and the temperature of each of the plurality of processing units, and the utilization of the memory. A complex environment may be arranged by the plurality of preset states, and a policy for efficiently allocating the plurality of DNNs to the plurality of processing units may be provided.

Referring to FIG. 8, a plurality of preset states $S_1$ through $S_{M1}$ may include first through $M1^{th}$ states $S_1$ through $S_{M1}$. Features for the plurality of preset states $S_1$ through $S_{M1}$ may include the number of heavy DNNs (# of heavy DNNs) having more operations than the preset number, the number of DNNs ( of DNNs), the CPU utilization $Util_{CPU}$, the GPU utilization $Util_{CPU}$, a DSP utilization $Util_{DSP}$, a memory utilization $Util_{MEM}$, the CPU temperature $Temp_{CPU}$, the GPU temperature $Temp_{GPU}$, and the DSP temperature $Temp_{DSP}$.

The plurality of preset states $S_1$ through $S_{M1}$ may be mutually exclusive in at least one feature. The first state $S_1$ may be a state, in which the number of heavy DNNs is 1, the number of DNNs is 3, the CPU utilization $Util_{CPU}$ is less than a preset number cu, the GPU utilization $Util_{GPU}$ is less than a preset number gu, the DSP utilization $Util_{DSP}$ is less than a preset number du, the memory utilization $Util_{MEM}$ is less than a preset number mu, the CPU temperature $Temp_{CPU}$ is less than a preset number ct, the GPU temperature $Temp_{GPU}$ is less than a preset number gt, and the DSP temperature $Temp_{DSP}$ is less than a preset number dt. Because the number of heavy DNNs is 2 in the second state S2, the second state S2 may be exclusive to the first state $S_1$ with respect to the number of heavy DNNs. Because the CPU utilization $Util_{GPU}$ is equal to or greater than cu in the fourth sate S4, the fourth state S4 may be exclusive to the first state S1 with respect to the CPU utilization $Util_{CPU.}$ Because in the $M1^{th}$ state $S_{M1}$, the number of heavy DNNs is 3, the number of DNNs is 4, the CPU utilization $Util_{CPU}$, the GPU utilization $Util_{CPU}$, and the DSP utilization $Util_{DSP}$ are greater than or equal to cu, gu, and du, respectively, the memory utilization $Util_{MEM}$ is greater than mu, and the CPU temperature $Temp_{CPU}$, the GPU temperature $Temp_{GPU}$, and the DSP temperature $Temp_{DSP}$ are greater than or equal to ct, gt, and dt, respectively, the $M1^{th}$ state SM1 may be exclusive to the first state $S_1$ with respect to all features.

The plurality of preset states $S_1$ through $S_{M1}$ may cover the entire range of the utilization and temperature of each of the plurality of processing units, and may cover the entire range of utilization of the memory. Because the first state $S_1$ includes the CPU utilization $Util_{GPU}$ that is less than cu and the fourth state $S_4$ includes the CPU utilization $Util_{GPU}$ that is greater than or equal to cu, the first state $S_1$ and the fourth state $S_4$ may cover the entire range (that is, 0 % to 100 %) of the CPU utilization $Util_{GPU}$ Similarly, because the first state $S_1$ includes the GPU utilization $Util_{GPU}$ that is less than gu and the DSP utilization $Util_{DSP}$ that is less than du and the $M1^{th}$ state $S_{M1}$ includes the GPU utilization $Util_{GPU}$ that is greater than or equal to gu and the DSP utilization $Util_{DSP}$ that is greater than or equal to du, the first state $S_1$ and the $M1^{th}$ state $S_{M1}$ may cover the entire range (that is, 0 % to 100 %) of the GPU utilization $Util_{GPU}$ and the DSP utilization $Util_{DSP}$.

Similarly, because the first state $S_1$ includes the memory utilization $Util_{MEM}$ that is less than mu and the seventh state $S_7$ includes the memory utilization $Util_{MEM}$ that is greater than or equal to mu, the first state $S_1$ and the seventh state $S_7$ may cover the entire range (that is, 0 % to 100 %) of the memory utilization $Util_{MEM}$. Similarly, because the first state $S_1$ includes the CPU temperature $Temp_{CPU}$, the GPU temperature $Temp_{GPU}$, and the DSP temperature $Temp_{DSP}$, which are respectively less than ct, gt, and dt, and the $M1^{th}$ state $S_{M1}$ includes the CPU temperature $Temp_{CPU}$, the GPU temperature $Temp_{GPU}$, and the DSP temperature $Temp_{DSP}$, which are respectively greater than or equal to ct, gt, and dt, the first state $S_1$ and the $M1^{th}$ state $S_{M1}$ may cover the entire range of the CPU temperature $Temp_{CPU}$, the GPU temperature $Temp_{GPU}$, and the DSP temperature $Temp_{DSP}$.

A plurality of preset states may cover the entire range of the utilization and temperature of each of a plurality of processing units, and cover the entire range of the utilization of a memory, and because the plurality of preset states are exclusive to each other with respect to at least one feature, one state corresponding to a state of a system may be selected from the plurality of preset states.

Referring to FIG. 9, the plurality of preset states $S_1$ through $S_{M2}$ may include first through $M2^{nd}$ states $S_1$ through $S_{M2}$. Features for the plurality of preset states $S_1$ through $S_{M2}$ may include the number of heavy DNNs (# of heavy DNNs) having more operations than the preset number, the number of DNNs (# of DNNs), the CPU utilization $Util_{CPU}$, the GPU utilization $Util_{GPU}$, the NPU utilization $Util_{NPU}$, the memory utilization $Util_{MEM}$, the CPU temperature $Temp_{CPU}$, the GPU temperature $Temp_{GPU}$, and the NPU temperature $Temp_{NPU}$.

The plurality of predetermined states $S_1$ through $S_{M2}$ may be distinguished from one another by a subdivided utilization range and temperature range. Accordingly, when, in the embodiment with reference to FIG. 8, the utilization and temperature are divided by one boundary value, in the embodiment with reference to FIG. 9, the utilization and temperature may be divided by two boundary values. The CPU utilization $Util_{GPU}$ may be divided, by boundary values of $cu_1$ and $cu_2$, into a section less than $cu_1$, a section greater than or equal to $cu_1$ and less than $cu_2$, and a section greater than or equal to $cu_2$. Similarly, the CPU temperature $Temp_{CPU}$ may be divided, by boundary values of $ct_1$ and $ct_2$, into a section less than $ct_1$, a section greater than or equal to $ct_1$ and less than $ct_2$, and a section greater than or equal to $ct_2$. In the embodiments with reference to FIG. 9, the utilization and the temperature are divided by two boundary values but the number of boundary values is not limited thereto.

The boundary values of the utilization and the temperature may be set to any values. For example, $cu_1$ may

be 25 % and $cu_2$ may be 75 %, but the embodiment is not limited thereto. For example, $ct_1$ may be 50 °C and $ct_2$ may be 70 °C but the embodiment is not limited thereto. The boundary values of the utilization may be set equal to or different from each other. For example, at least two of $cu_1$, $gu_1$, $nu_1$, and $mu_1$ may be the same as or different from each other. For example, at least two of $cu_2$, $gu_2$, $nu_2$, and $mu_2$ may be the same as or different from each other. Similarly, the boundary values of the temperature may be set equal to or different from each other. For example, at least two of $ct_1$, $gt_1$, and $nt_1$ may be the same as or different from each other. For example, at least two of $ct_2$, gt2, and $nt_2$ may be the same as or different from each other.

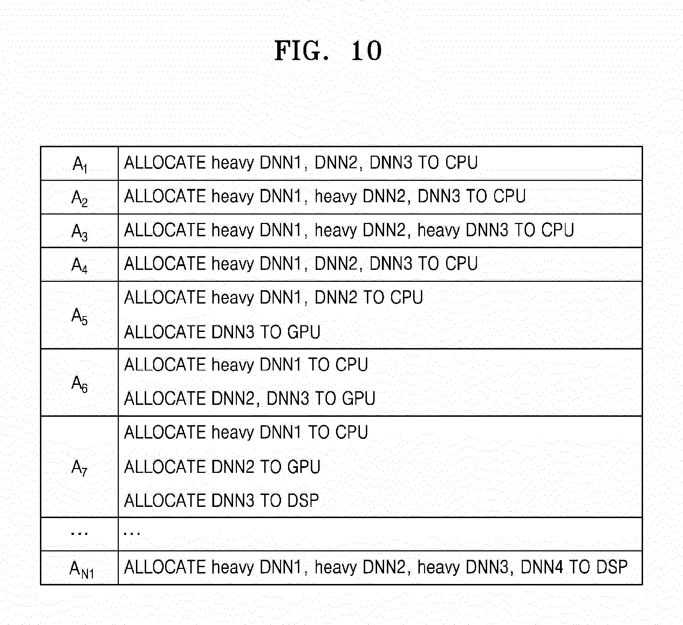

FIG. 10 is a table of actions according to at least one embodiment.

A plurality of preset actions $A_1$ through $A_{N1}$ may include respectively allocating a plurality of DNNs to a plurality of processing units in a preset combination.

The plurality of preset actions $A_1$ through $A_{N1}$ may cover all combinations allocable in the plurality of preset states. For instance, each of the plurality of preset actions may relate to a particular allocation of DNNs to processing units. The plurality of preset actions may cover all possible combinations of DNNs and processing units. In the embodiment with reference to FIG. 10, the plurality of preset actions $A_1$ through $A_{N1}$ may include all combinations allocable in the plurality of preset states $S_1$ through $S_{M1}$ in FIG. 8. For example, for the first state S 1 in FIG. 8, a plurality of preset actions $A_1$ through $A_{N1}$ may include actions respectively allocating a first DNN (heavy DNN1), a second DNN (DNN2), and a third DNN (DNN3) to a CPU, a GPU, and a DSP, such as a first action $A_1$ allocating a first DNN (heavy DNN1), a second DNN (DNN2), and a third DNN (DNN3) to a CPU, a fifth action $A_5$ allocating the first DNN (heavy DNN1) and the second DNN (DNN2) to a CPU, and the third DNN (DNN3) to a GPU, a sixth action $A_6$ allocating the first DNN (heavy DNN1) to a CPU, and the second DNN (DNN2) and the third DNN (DNN3) to a GPU, and a seventh action $A_7$ allocating the first DNN (heavy DNN1) to a CPU, the second DNN (DNN2) to a GPU, and the third DNN (DNN3) to a DSP.

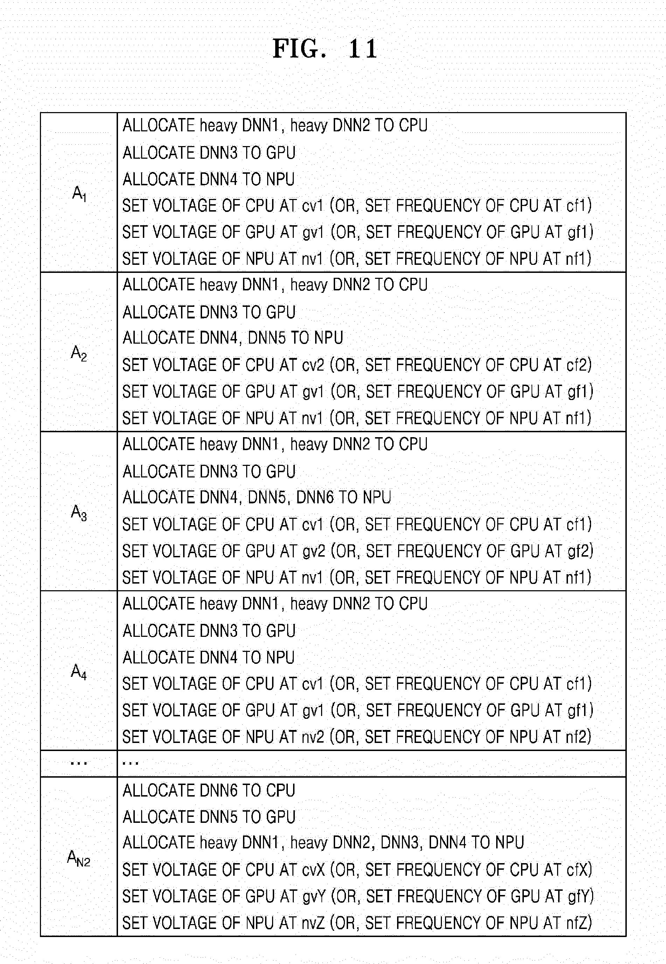

FIG. 11 is a table of actions according to at least one embodiment.

The plurality of preset actions $A_1$ through $A_{N2}$ may include respectively allocating the plurality of DNNs to the plurality of processing units in a preset combination, and setting at least one value of a voltage and frequency of each of the plurality of processing units as a preset value. A policy on the voltage and frequency for the processing units to process the plurality of DNNs in a time and energy efficient manner may be provided by the plurality of preset actions $A_1$ through $A_{N2}$.

Setting the voltage and frequency to preset values may include scaling the voltage and frequency to preset values. The preset values of the voltage and frequency may be determined according to specifications of the plurality of processing units. For example, values for the frequency of a CPU may be determined according to the frequency specification of the CPU of the manufacturer.

In the first action $A_1$ and the fourth action $A_4$, the plurality of DNNs may be respectively allocated to the plurality of processing units in the same combination. The first DNN (heavy DNN1) and the second DNN (heavy DNN2) may be allocated to a CPU, the third DNN (DNN3) may be allocated to a GPU, and a fourth DNN (DNN4) may be allocated to an NPU. In the first action A1, a voltage of an NPU may be set at nv1 (and/or the frequency of the NPU set at nf1), and in the fourth action A4, the voltage of the NPU may be set at nv2 (and/or the frequency of the NPU set at nf2). In the learning, as an action having better quality is selected from the first action $A_1$ and the fourth action $A_4$, the voltage (and/or frequency) of a more time- and energy-efficient NPU may be searched for in a situation where the plurality of DNNs are allocated to the plurality of processing units. The plurality of actions may each relate to a corresponding allocation of DNNs to processing units and a corresponding selection of voltage and/or frequency values for one or more of the processing units.

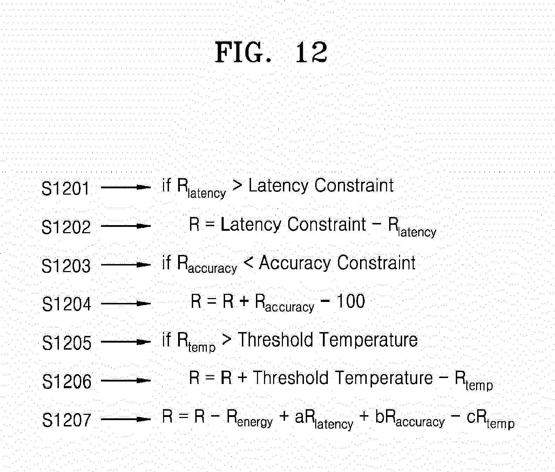

FIG. 12 is a diagram describing a reward according to at least one embodiment.

The processing unit obtains the time and accuracy of the process of the plurality of DNNs according to the action selected in the current state, and the temperature and the energy consumption of each of the plurality of processing units during the runtime of the process.

The processing unit determines the reward as to be dependent on at least one of the time and accuracy of the process and the temperature and the energy consumption of each of the plurality of processing units. The processing unit may, for example, calculate the reward to have a larger value as the time of the process decreases. The processing unit may calculate the reward to have a larger value as the accuracy of the process increases. The processing unit may calculate the reward to have a larger value as the temperature of each of the plurality of processing units decreases. The processing unit may calculate the reward to have a larger value as the energy consumption of the plurality of processing units decreases.

In at least one embodiment, the processing unit may calculate the reward according to operations in FIG. 12.

In operation S1201, the processing unit compares a time $R_{latency}$ of the process with a latency constraint. The time $R_{latency}$ of the process may be the total time of the process of the plurality of DNNs according to the action. Alternatively, the time $R_{latency}$ of the process may be the time of the process of any DNN in the process of the plurality of DNNs according to the action. When the time $R_{latency}$ of the process is greater than the latency constraint (e.g. greater than a predefined latency threshold), the process may proceed to operation S1202. Otherwise, the process may proceed to operation S1203.

In operation S1202, the processing unit calculates a reward R by subtracting the time $R_{latency}$ of the process from the latency constraint. For example, when the latency constraint is 0.5 s and the time $R_{latency}$ of the process is 0.7 s, the reward R may be -0.2. That is, the processing unit determines the difference between the latency constraint and the time $R_{latency}$ of the process.

In operation S1203, the processing unit compares the accuracy $R_{accuracy}$ of the process with an accuracy constraint. The accuracy $R_{accuracy}$ of the process may be an average accuracy of the process of each DNN in the process of the plurality of DNNs according to the action. Alternatively, the accuracy $R_{accuracy}$ of the process may be the accuracy of the process of any one DNN in the process of the plurality of DNNs according to the action. When the accuracy $R_{accuracy}$ of the process is less than the accuracy constraint (e.g. less than a predefined accuracy threshold), the process may proceed to operation S1204. Otherwise, the process may proceed to operation S1205.

In operation S1204, the processing unit calculates the reward R by adding the accuracy $R_{accuracy}$ of the process to the reward R and subtracting 100 from the addition result. For example, when the reward R is 0 and the accuracy $R_{accuracy}$ of the process is 87 %, the calculated reward R may be -13.

In operation S1205, the processing unit compares temperature $R_{temp}$ of the plurality of processing units with a temperature constraint (threshold temperature). The temperature $R_{temp}$ of the plurality of processing units may be the maximum temperature or an average temperature of the plurality of processing units during the runtime of the process. When the temperature $R_{temp}$ of the plurality of processing units is greater than the threshold temperature, the process may proceed to operation S1206. Otherwise, the process may proceed to operation S1207.

In operation S1206, the processing unit calculates the reward R by adding the threshold temperature to the reward R and subtracting the temperature $R_{temp}$ from the addition result. For example, when the reward R is 0, the threshold temperature is 75 °C, and the temperature $R_{temp}$ is 77 °C, the calculated reward R may be -2.

In operation S1207, the processing unit calculates the reward R from the energy consumption $R_{energy}$ of the plurality of processing units, the time $R_{latency}$ of the process, the accuracy $R_{accuracy}$ of the process, and the temperature $R_{temp}$ of the plurality of processing units. The energy consumption $R_{energy}$ of the plurality of processing units may be energy consumption of the plurality of processing units during the runtime of the process. To correct scales of the energy consumption $R_{energy}$, the time $R_{latency}$ of the process, the accuracy $R_{accuracy}$ of the process, and the temperature $R_{temp}$ of the plurality of processing units, constants a, b, and c may be used.

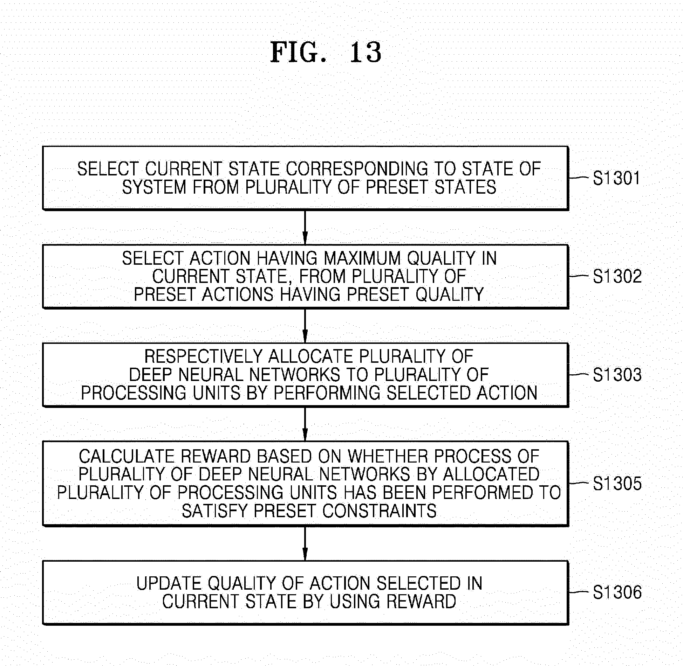

FIG. 13 is a flowchart of a learning method of a system for allocating DNNs to processing units based on reinforcement learning, according to at least one embodiment.

In operation S1301, the processing unit selects the current state corresponding to the state of the system from a plurality of preset states. The state of the system may be determined by at least one of a utilization and temperature of each of the plurality of processing units, and the utilization of the memory. Accordingly, the processing unit may select the current state corresponding to at least one of the utilization and temperature of each of the plurality of processing units, and the utilization of the memory.

In addition, the processing unit may select the current state corresponding to at least one of the number of DNNs and the number of DNNs having more operations than the preset number of DNNs, in the plurality of preset states. In these cases, the operation may mean at least one of a multiplication operation, an accumulation operation, and a MAC operation.

In operation S1302, the processing unit selects an action having the maximum quality in the current state, from a plurality of preset actions having preset quality. The action having the maximum quality in the current state may include an action for the maximum Q-value in the current state. The processing unit may select the action for the maximum Q-value in the current state by referring to the Q-table. The plurality of preset actions may include respectively allocating the plurality of DNNs to the plurality of processing units in a preset combination.

In operation S1303, the processing unit respectively allocates the plurality of DNNs to the plurality of processing units by performing the selected action. The plurality of processing units may process the plurality of allocated DNNs, respectively.

In operation S1305, the processing unit calculates the reward based on whether the process of the plurality of DNNs by the allocated plurality of processing units has been performed to satisfy preset constraints. The processing unit may obtain at least one of the time and accuracy of the process according to the action selected in the current state, and calculate the reward based on whether at least one of the time and accuracy of the process satisfies the preset constraints. In addition, the processing unit may obtain the temperature of each of the plurality of processing units during the runtime of the process according to the action selected in the current state, and calculate the reward based on whether the temperature of each of the plurality of processing units satisfies the preset constraints. In addition, the processing unit may calculate the reward to be dependent on at least one of the time and accuracy of the process according to the action selected in the current state, and the temperature and energy consumption of each of the plurality of processing units during the runtime of the process according to the action selected in the current state.

In operation S1306, the processing unit updates the quality of the action selected in the current state by using the reward. The processing unit may update the quality of the action selected in the current state based on the Q-learning. The processing unit may update the quality of the action by updating the Q-value for the action in the Q-table.

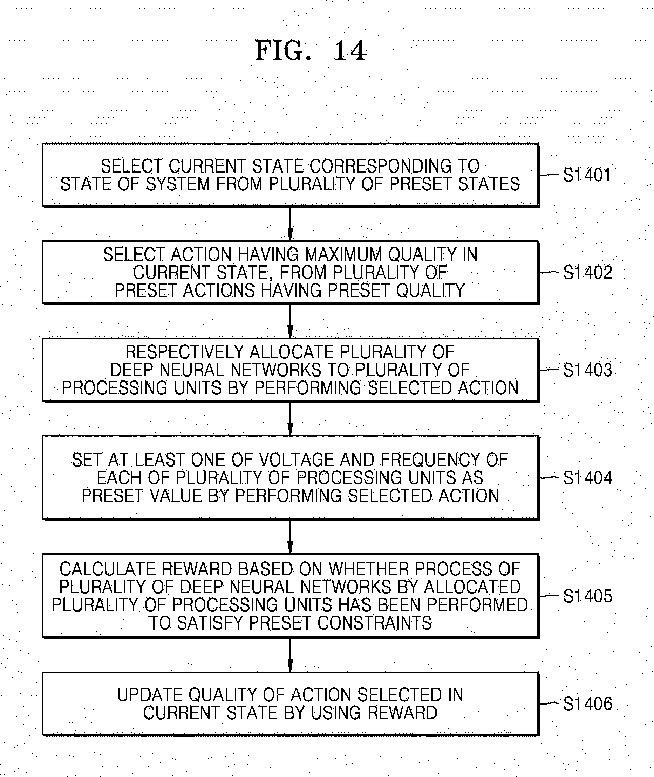

FIG. 14 is a flowchart of a learning method of a system for allocating DNNs to processing units based on reinforcement learning, according to at least one embodiment.

In operation S1401, the processing unit selects the current state corresponding to the state of the system from a plurality of preset states. The descriptions of operation S1301 in FIG. 13 may be applied to operation S1401.

In operation S1402, the processing unit selects an action having the maximum quality in the current state, from a plurality of preset actions having preset quality. The descriptions of operation S1302 in FIG. 13 may be applied to operation S1402.

In operation S1403, the processing unit respectively allocates a plurality of DNNs to a plurality of processing units by performing the selected action. The descriptions of operation S1303 in FIG. 13 may be applied to operation S1403.

In operation S1404, the processing unit sets at least one value of the voltage and/or frequency of each of the plurality of processing units to a preset value by performing the selected action. The plurality of preset actions may include setting at least one value of the voltage and frequency of each of the plurality of processing units to a preset value. The plurality of processing units may respectively process the plurality of allocated DNNs by using the set voltage or frequency.

In operation S1405, the processing unit calculates the reward based on whether the process of the plurality of DNNs by the allocated plurality of processing units has been performed to satisfy preset constraints. The descriptions of operation S1305 in FIG. 13 may be applied to operation S1405.

In operation S1406, the processing unit updates the quality of the action selected in the current state by using the reward. The descriptions of operation S1306 in FIG. 13 may be applied to operation S1406.

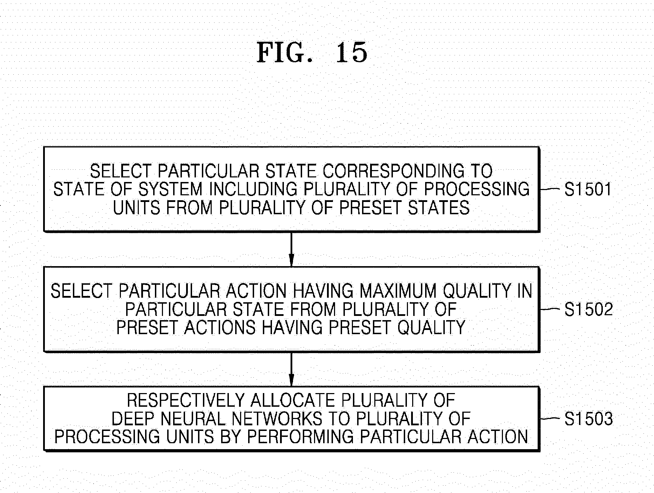

FIG. 15 is a flowchart of an operation method of a system for allocating DNNs to processing units based on reinforcement learning, according to at least one embodiment.

In operation S1501, the processing unit selects a particular state corresponding to the state of the system including a plurality of processing units from a plurality of preset states. A description of the selection of the current state in operation S1301 in FIG. 13 may be applied to the selection of the particular state.

In operation S1502, the processing unit selects a particular action having the maximum quality in the particular state, from a plurality of preset actions having preset quality. The processing unit may select the particular action for the maximum Q-value in the particular state by referring to the Q-table. The Q-table may be obtained from the learning with reference to FIGS. 13 and 14.

In operation S1503, the processing unit respectively allocates the plurality of DNNs to the plurality of processing units by performing the particular action. The particular action may include respectively allocating the plurality of DNNs to the plurality of processing units in a particular combination. The plurality of processing units may respectively process the plurality of DNNs allocated according to the particular action.

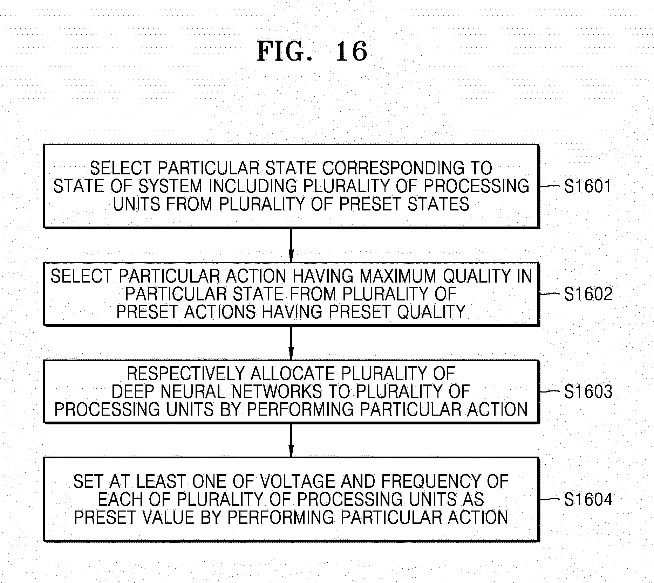

FIG. 16 is a flowchart of an operation method of a system for respectively allocating DNNs to processing units based on reinforcement learning, according to at least one embodiment.

In operation S1601, the processing unit selects a particular state corresponding to the state of the system including a plurality of processing units from a plurality of preset states. The descriptions of operation S1501 in FIG. 15 may be applied to operation S1601.

In operation S1602, the processing unit selects a particular action having the maximum quality in the particular state, from a plurality of preset actions having preset quality. The descriptions of operation S1502 in FIG. 15 may be applied to operation S1602.

In operation S1603, the processing unit respectively allocates the plurality of DNNs to the plurality of processing units by performing the particular action. The descriptions of operation S1503 in FIG. 15 may be applied to operation S1603.

In operation S1604, the processing unit sets at least one value of the voltage and frequency of each of the plurality of processing units to a preset value by performing the particular action. The particular action may include setting at least one value of the voltage and frequency of each of the plurality of processing units to a particular value. The plurality of processing units may respectively process the plurality of DNNs allocated according to the particular action by using the voltage or frequency set according to the particular action.

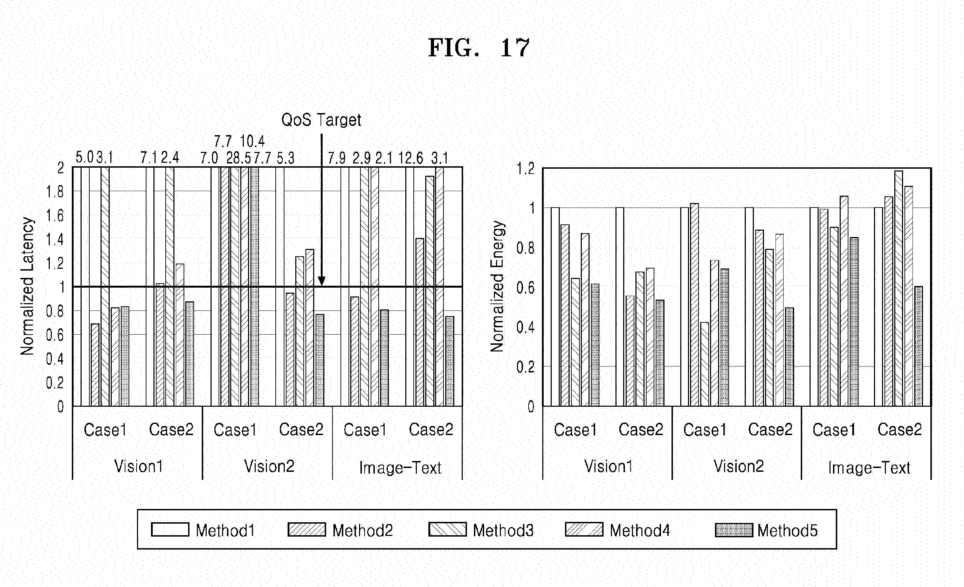

FIG. 17 illustrates graphs of performance of a process, according to at least one embodiment.

The graphs represents the result of processing a plurality of DNNs allocated according to embodiments, and the result of processing a plurality of DNNs allocated by using conventional methods. In the graphs, a method1, a method2, a method3, and a method 4 represents conventional methods, and a method 5 represents a method according to embodiments of the inventive concepts. In the graphs, a case1 represents a case where the plurality of DNNs are processed by using a first application processor (AP), and a case2 represents a case where the plurality of DNNs are processed by using a second AP. The first AP may include a first plurality of processing units, and the second AP may include a second plurality of processing units. In the graphs, a vision1 represents the process of a first plurality of DNNs for image processing, a vision2 represents the process of a second plurality of DNNs for image processing, and an image-text represents the process of a third plurality of DNNs for image-text conversion.

Referring to the graphs, the method 5 according to the embodiments satisfies the target quality for latency except for the case 1 of the vision 2. The methods yields an energy saving of an average of 30.2 %, 18.0 %, and 29.0 % with respect to the method2, the method3, and the method4, respectively. The methods provides the process of time- and energy-efficient plurality of DNNs with respect to other conventional methods.

The embodiments described above may be implemented as processing circuitry including a hardware component, a software component, and/or a combination of a hardware component and a software component. For example, the devices, methods, and components described above in the embodiments may be implemented by using, for example, a processor, a controller, an arithmetic logic unit (ALU), a DSP, a microcomputer, a field programmable gate array (FPGA), a microprocessor, or one or more general purpose computers or special purpose computers, such as a certain device capable of executing instructions and responding thereto. A processing device may include an operating system (OS), and perform software applications performed on the OS. In addition, the processing device may also, in response to execution of the software, access, store, manipulate, process, and generate data. For convenience of understanding, although the processing device has been described for the case in which one processing device has been used, one of ordinary skill in the art may understand that the processing device may include a plurality of processing elements and/or multiple types of processing elements. For example, the processing device may include a plurality of processors or one processor and one controller. In addition, other processing configurations, such as a parallel processor, may also be used.

The software may include a computer program, code, an instruction, or a combination thereof, and may configure the processing device to operate as desired, or command the processing device independently or collectively. Software and/or data may, to be interpreted by a processing device or provide instructions or data to the processing device, be permanently or temporarily embodied in any type of machine, a component, a physical device, virtual equipment, a computer storage medium or device, or a transmitted signal wave. Software may be distributed over a networked computer system, and may also be stored or executed in a distributed manner. Software and data may be stored in a computer-readable recording medium.

The method according to the embodiment may be implemented in a form of program instructions executable by using various computer means, and may be recorded in a computer-readable medium. The computer-readable medium may include program instructions, data files, data structures, or the like, separately or in a combination thereof. The program instructions to be recorded on the medium may be those particularly designed and configured for the embodiments, or may also be available to one of ordinary skill in the art of computer software. Examples of the computer-readable recording media may include magnetic media, such as a hard disk, a floppy disk and magnetic tape, optical media, such as a compact disk (CD) - read-only memory (ROM) (CD-ROM) and a digital versatile disk (DVD), a magneto-optical medium, such as a floptical disk, and hardware devices particularly configured to store and perform program instructions, such as ROM, random access memory (RAM), flash memory. Examples of program instructions may include machine language code, such as code generated by a compiler, as well as high-level language code, that is executable by a computer using an interpreter, etc.

As described above, by using reinforcement learning to allocate a plurality of DNNs to a plurality of processors, an optimal distribution of the DNNs is applied to the plurality of processors, thereby improving the efficiency of the DNNs, reducing computation times, and creating an energy savings with respect to conventional methods.

While the inventive concepts have been particularly shown and described with reference to embodiments thereof, it will be understood that various changes in form and details may be made therein without departing from the scope of the following claims.

## Claims

1. A system configured to allocate deep neural networks to a plurality of processors based on reinforcement learning, the system comprising:

   a memory configured to store one or more instructions; and
   the plurality of processors, wherein at least one processor of the plurality of processors, by performing the one or more instructions, is configured to:

   select a current state from a plurality of preset states, the current state corresponding to a state of the system and to a plurality of preset actions having at least one preset quality,
   select an action, of the plurality of preset actions, having a maximum quality in the current state and respectively allocate a plurality of deep neural networks, DNNs, to the plurality of processors based on the selected action,

determine a reward based on whether a process of the plurality of DNNS by the allocated plurality of processors satisfies preset constraints, and
update the at least one preset quality of the action selected in the current state based on the reward.

2. The system of claim 1, wherein the at least one processor is configured to select the current state based on at least one of a utilization or a temperature of each of the plurality of processors.

3. The system of claim 2, wherein the at least one processor is further configured to select the current state corresponding to the utilization of the memory.

4. The system of claim 3, wherein the plurality of preset states represent a finite number of states covering a range of the utilization of the memory and at least one of the utilization or the temperature of each of the plurality of processors.

5. The system of any preceding claim, wherein the at least one processor is configured to select a preset state, from the plurality of preset states, as the current state, based on at least one of

a number of the DNNs corresponding to the preset state, or
a number of the DNNs comprising a number of operations greater than a preset number from the DNNs.

6. The system of any preceding claim, wherein the plurality of preset actions comprise respectively allocating the plurality of DNNs to the plurality of processors in a preset combination.

7. The system of claim 6, wherein the plurality of preset actions further comprise setting at least one value of a voltage and a frequency of each of the plurality of processors to preset values.

8. The system of any of claims 1-7, wherein the at least one processor is further configured to set at least one value of a voltage and a frequency of each of the plurality of processors, for performing a process, according to the action selected in the current state.

9. The system of any preceding claim, wherein the at least one processor is further configured to

obtain at least one of time or accuracy of a process according to the action selected in the current state, and
determine the reward based on whether the at least one of the time or the accuracy of the process satisfies the preset constraints.

10. The system of any preceding claim, wherein the at least one processor is further configured to

obtain a temperature of the plurality of processors during a runtime of a process according to the action selected in the current state, and
determine the reward based on whether the temperature of the plurality of processors satisfies the preset constraints.

11. The system of any preceding claim, wherein the at least one processor is configured to calculate the reward based on at least one of

a time and accuracy of a process, according to the action selected in the current state,
or
a temperature and an energy consumption of the plurality of processors during a runtime of the process according to the action selected in the current state.

12. A system configured to allocate a deep neural network, DNN, based on reinforcement learning, the system comprising:

a memory configured to store one or more instructions; and
a plurality of processing units, wherein at least one processor, of the plurality of processing units, by executing the one or more instructions, is configured to

select a particular state from a plurality of preset states, the particular state corresponding to a state of the system and to a plurality of preset actions having at least one preset quality,
select a particular action, of the plurality of preset actions, having a maximum quality in the particular state, and
respectively allocate a plurality of deep neural networks to the plurality of processors based on the selection of the particular action.

13. The system of claim 12, wherein

the reinforcement learning is based on Q-learning configured to update at least one quality to maximize a reward based on the particular action, and
wherein the reward has at least one of

a larger value as a process time of a process of the plurality of DNNs, by the allocated plurality of processors and according to the particular action, decreases,
a larger value as accuracy of the process increases,
a larger value as temperature of the plurality of processors decreases during a runtime of the process, or
a larger value as energy consumption of the plurality of processors decreases.

14. The system of claim 12 or claim 13, wherein the plurality of preset states represent a finite number of states covering a range of utilization of the memory and at least one of the utilization or temperature of each of the plurality of processors.

15. An operation method of allocating deep neural networks, DNNs, to processing units based on reinforcement learning, the operation method comprising:

selecting a particular state from a plurality of preset states, the particular state corresponding to a state of a system and to a plurality of preset actions having at least one preset quality;
selecting a particular action, from the plurality of preset actions, having a maximum quality in the particular state; and
respectively allocating a plurality of DNNs to a plurality of processors based on the selection of the particular action.

# FIG. 1

# FIG. 2

| | |
|---|---|
| INITIALIZE Q-TABLE | — S201 |
| ↓ | |
| SELECT ACTION FOR CURRENT STATE FROM Q-TABLE | — S202 |
| ↓ | |
| PERFORM ACTION (CHANGE TO NEXT STATE) | — S203 |
| ↓ | |
| OBTAIN REWARD AND CALCULATE TEMPORAL DIFFERENCE (TD) | — S204 |
| ↓ | |
| UPDATE Q-TABLE | — S205 |

# FIG. 3

300

| ACTION STATE | $A_1$ | $A_2$ | $A_3$ | $\cdots$ | $A_N$ |
|---|---|---|---|---|---|
| $S_1$ | $Q(S_1, A_1)$ | $Q(S_1, A_2)$ | $Q(S_1, A_3)$ | $\cdots$ | $Q(S_1, A_N)$ |
| $S_2$ | $Q(S_2, A_1)$ | $Q(S_2, A_2)$ | $Q(S_2, A_3)$ | $\cdots$ | $Q(S_2, A_N)$ |
| $S_3$ | $Q(S_3, A_1)$ | $Q(S_3, A_2)$ | $Q(S_3, A_3)$ | $\cdots$ | $Q(S_3, A_N)$ |
| $\cdots$ | $\cdots$ | $\cdots$ | $\cdots$ | $\cdots$ | $\cdots$ |
| $S_M$ | $Q(S_M, A_1)$ | $Q(S_M, A_2)$ | $Q(S_M, A_3)$ | $\cdots$ | $Q(S_M, A_N)$ |

# FIG. 4

# FIG. 5

510

DNN1 → DNN2 →

DNN1 → DNN3 →

S501
SELECT CURRENT
STATE AND ACTION

S502
PERFORM ACTION

S503
CALCULATE
REWARD

S504
UPDATE Q-TABLE

530

|  | $A_1$ | $A_2$ | $\cdots$ | $A_N$ |
|---|---|---|---|---|
| $S_1$ | $Q(S_1, A_1)$ | $Q(S_1, A_2)$ | $\cdots$ | $Q(S_1, A_N)$ |
| $S_2$ | $Q(S_2, A_1)$ | $Q(S_2, A_2)$ | $\cdots$ | $Q(S_2, A_N)$ |
| $\cdots$ | $\cdots$ | $\cdots$ | $\cdots$ | $\cdots$ |
| $S_M$ | $Q(S_M, A_1)$ | $Q(S_M, A_2)$ | $\cdots$ | $Q(S_M, A_N)$ |

520

Processing Unit1    Processing Unit2    Processing Unit3    ...

# FIG. 6

610

| DNN1 | → | DNN2 | → |
| DNN3 | → |

S601 — SELECT PARTICULAR STATE AND PARTICULAR ACTION

S602 — PERFORM PARTICULAR ACTION

630

|  | $A_1$ | $A_2$ | $\cdots$ | $A_N$ |
|---|---|---|---|---|
| $S_1$ | $Q(S_1, A_1)$ | $Q(S_1, A_2)$ | $\cdots$ | $Q(S_1, A_N)$ |
| $S_2$ | $Q(S_2, A_1)$ | $Q(S_2, A_2)$ | $\cdots$ | $Q(S_2, A_N)$ |
| $\cdots$ | $\cdots$ | $\cdots$ | $\cdots$ | $\cdots$ |
| $S_M$ | $Q(S_M, A_1)$ | $Q(S_M, A_2)$ | $\cdots$ | $Q(S_M, A_N)$ |

631

| $S_1$ | $A_3$ |
|---|---|
| $S_2$ | $A_{10}$ |
| $\cdots$ | $\cdots$ |
| $S_M$ | $A_{29}$ |

620

| Processing Unit1 | Processing Unit2 | Processing Unit3 | $\cdots$ |

# FIG. 7

| FEATURES FOR STATE | DESCRIPTION |
|---|---|
| # of DNNs | NUMBER OF DNNs |
| # of heavy DNNs | NUMBER OF DNNs HAVING MORE OPERATIONS THAN PRESET NUMBER OF OPERATIONS |
| $Util_{CPU}$ | CPU UTILIZATION |
| $Util_{GPU}$ | GPU UTILIZATION |
| $Util_{NPU}$ | NPU UTILIZATION |
| $Util_{MEM}$ | MEMORY UTILIZATION |
| $Temp_{CPU}$ | CPU TEMPERATURE |
| $Temp_{GPU}$ | GPU TEMPERATURE |
| $Temp_{NPU}$ | NPU TEMPERATURE |
| ... | ... |

# FIG. 8

| $S_1$ | # of heavy DNNs= 1, # of DNNs = 3,<br>$Util_{CPU} < cu$, $Util_{GPU} < gu$, $Util_{DSP} < du$, $Util_{MEM} < mu$<br>$Temp_{CPU} < ct$, $Temp_{GPU} < gt$, $Temp_{DSP} < dt$ |
|---|---|
| $S_2$ | # of heavy DNNs= 2, # of DNNs = 3,<br>$Util_{CPU} < cu$, $Util_{GPU} < gu$, $Util_{DSP} < du$, $Util_{MEM} < mu$<br>$Temp_{CPU} < ct$, $Temp_{GPU} < gt$, $Temp_{DSP} < dt$ |
| $S_3$ | # of heavy DNNs= 3, # of DNNs = 3,<br>$Util_{CPU} < cu$, $Util_{GPU} < gu$, $Util_{DSP} < du$, $Util_{MEM} < mu$<br>$Temp_{CPU} < ct$, $Temp_{GPU} < gt$, $Temp_{DSP} < dt$ |
| $S_4$ | # of heavy DNNs= 1, # of DNNs = 3,<br>$Util_{CPU} \geq cu$, $Util_{GPU} < gu$, $Util_{DSP} < du$, $Util_{MEM} < mu$<br>$Temp_{CPU} < ct$, $Temp_{GPU} < gt$, $Temp_{DSP} < dt$ |
| $S_5$ | # of heavy DNNs= 1, # of DNNs = 3,<br>$Util_{CPU} < cu$, $Util_{GPU} \geq gu$, $Util_{DSP} < du$, $Util_{MEM} < mu$<br>$Temp_{CPU} < ct$, $Temp_{GPU} < gt$, $Temp_{DSP} < dt$ |
| $S_6$ | # of heavy DNNs= 1, # of DNNs = 3,<br>$Util_{CPU} < cu$, $Util_{GPU} < gu$, $Util_{DSP} \geq du$, $Util_{MEM} < mu$<br>$Temp_{CPU} < ct$, $Temp_{GPU} < gt$, $Temp_{DSP} < dt$ |
| $S_7$ | # of heavy DNNs= 1, # of DNNs = 3,<br>$Util_{CPU} < cu$, $Util_{GPU} < gu$, $Util_{DSP} < du$, $Util_{MEM} \geq mu$<br>$Temp_{CPU} < ct$, $Temp_{GPU} < gt$, $Temp_{DSP} < dt$ |
| $S_8$ | # of heavy DNNs= 1, # of DNNs = 3,<br>$Util_{CPU} < cu$, $Util_{GPU} < gu$, $Util_{DSP} < du$, $Util_{MEM} < mu$<br>$Temp_{CPU} \geq ct$, $Temp_{GPU} < gt$, $Temp_{DSP} < dt$ |
| ... | ... |
| $S_{M1}$ | # of heavy DNNs= 3, # of DNNs = 4,<br>$Util_{CPU} \geq cu$, $Util_{GPU} \geq gu$, $Util_{DSP} \geq du$, $Util_{MEM} \geq mu$<br>$Temp_{CPU} \geq ct$, $Temp_{GPU} \geq gt$, $Temp_{DSP} \geq dt$ |

# FIG. 9

| | |
|---|---|
| $S_1$ | # of heavy DNNs= 2, # of DNNs = 4,<br>$Util_{CPU} < cu_1$, $Util_{GPU} < gu_1$, $Util_{NPU} < nu_1$, $Util_{MEM} < mu_1$<br>$Temp_{CPU} < ct_1$, $Temp_{GPU} < gt_1$, $Temp_{NPU} < nt_1$ |
| $S_2$ | # of heavy DNNs= 2, # of DNNs = 4,<br>$cu_1 \leq Util_{CPU} < cu_2$, $Util_{GPU} < gu_1$, $Util_{NPU} < nu_1$, $Util_{MEM} < mu_1$<br>$Temp_{CPU} < ct_1$, $Temp_{GPU} < gt_1$, $Temp_{NPU} < nt_1$ |
| $S_3$ | # of heavy DNNs= 2, # of DNNs = 4,<br>$cu_1 \leq Util_{CPU} < cu_2$, $gu_1 \leq Util_{GPU} < gu_2$, $Util_{NPU} < nu_1$, $Util_{MEM} < mu_1$<br>$Temp_{CPU} < ct_1$, $Temp_{GPU} < gt_1$, $Temp_{NPU} < nt_1$ |
| $S_4$ | # of heavy DNNs= 2, # of DNNs = 4,<br>$cu_1 \leq Util_{CPU} < cu_2$, $gu_1 \leq Util_{GPU} < gu_2$, $nu_1 \leq Util_{NPU} < nu_2$, $Util_{MEM} < mu_1$<br>$Temp_{CPU} < ct_1$, $Temp_{GPU} < gt_1$, $Temp_{NPU} < nt_1$ |
| $S_5$ | # of heavy DNNs= 2, # of DNNs = 4,<br>$cu_1 \leq Util_{CPU} < cu_2$, $gu_1 \leq Util_{GPU} < gu_2$, $nu_1 \leq Util_{NPU} < nu_2$, $Util_{MEM} < mu_1$<br>$ct_1 \leq Temp_{CPU} < ct_2$, $Temp_{GPU} < gt_1$, $Temp_{NPU} < nt_1$ |
| $S_6$ | # of heavy DNNs= 2, # of DNNs = 4,<br>$cu_1 \leq Util_{CPU} < cu_2$, $gu_1 \leq Util_{GPU} < gu_2$, $nu_1 \leq Util_{NPU} < nu_2$, $Util_{MEM} < mu_1$<br>$ct_1 \leq Temp_{CPU} < ct_2$, $gt_1 \leq Temp_{GPU} < gt_2$, $Temp_{NPU} < nt_1$ |
| $S_7$ | # of heavy DNNs= 2, # of DNNs = 4,<br>$cu_1 \leq Util_{CPU} < cu_2$, $gu_1 \leq Util_{GPU} < gu_2$, $nu_1 \leq Util_{NPU} < nu_2$, $Util_{MEM} < mu_1$<br>$ct_1 \leq Temp_{CPU} < ct_2$, $gt_1 \leq Temp_{GPU} < gt_2$, $nt_1 \leq Temp_{NPU} < nt_2$ |
| ... | ... |
| $S_{M2}$ | # of heavy DNNs= 3, # of DNNs = 6,<br>$Util_{CPU} \geq cu_2$, $Util_{GPU} \geq gu_2$, $Util_{NPU} \geq nu_2$, $Util_{MEM} \geq mu_2$<br>$Temp_{CPU} \geq ct_2$, $Temp_{GPU} \geq gt_2$, $Temp_{NPU} \geq nt_2$ |

# FIG. 10

| $A_1$ | ALLOCATE heavy DNN1, DNN2, DNN3 TO CPU |
|---|---|
| $A_2$ | ALLOCATE heavy DNN1, heavy DNN2, DNN3 TO CPU |
| $A_3$ | ALLOCATE heavy DNN1, heavy DNN2, heavy DNN3 TO CPU |
| $A_4$ | ALLOCATE heavy DNN1, DNN2, DNN3 TO CPU |
| $A_5$ | ALLOCATE heavy DNN1, DNN2 TO CPU<br><br>ALLOCATE DNN3 TO GPU |
| $A_6$ | ALLOCATE heavy DNN1 TO CPU<br><br>ALLOCATE DNN2, DNN3 TO GPU |
| $A_7$ | ALLOCATE heavy DNN1 TO CPU<br><br>ALLOCATE DNN2 TO GPU<br><br>ALLOCATE DNN3 TO DSP |
| ... | ... |
| $A_{N1}$ | ALLOCATE heavy DNN1, heavy DNN2, heavy DNN3, DNN4 TO DSP |

# FIG. 11

| | |
|---|---|
| $A_1$ | ALLOCATE heavy DNN1, heavy DNN2 TO CPU<br>ALLOCATE DNN3 TO GPU<br>ALLOCATE DNN4 TO NPU<br>SET VOLTAGE OF CPU AT cv1 (OR, SET FREQUENCY OF CPU AT cf1)<br>SET VOLTAGE OF GPU AT gv1 (OR, SET FREQUENCY OF GPU AT gf1)<br>SET VOLTAGE OF NPU AT nv1 (OR, SET FREQUENCY OF NPU AT nf1) |
| $A_2$ | ALLOCATE heavy DNN1, heavy DNN2 TO CPU<br>ALLOCATE DNN3 TO GPU<br>ALLOCATE DNN4, DNN5 TO NPU<br>SET VOLTAGE OF CPU AT cv2 (OR, SET FREQUENCY OF CPU AT cf2)<br>SET VOLTAGE OF GPU AT gv1 (OR, SET FREQUENCY OF GPU AT gf1)<br>SET VOLTAGE OF NPU AT nv1 (OR, SET FREQUENCY OF NPU AT nf1) |
| $A_3$ | ALLOCATE heavy DNN1, heavy DNN2 TO CPU<br>ALLOCATE DNN3 TO GPU<br>ALLOCATE DNN4, DNN5, DNN6 TO NPU<br>SET VOLTAGE OF CPU AT cv1 (OR, SET FREQUENCY OF CPU AT cf1)<br>SET VOLTAGE OF GPU AT gv2 (OR, SET FREQUENCY OF GPU AT gf2)<br>SET VOLTAGE OF NPU AT nv1 (OR, SET FREQUENCY OF NPU AT nf1) |
| $A_4$ | ALLOCATE heavy DNN1, heavy DNN2 TO CPU<br>ALLOCATE DNN3 TO GPU<br>ALLOCATE DNN4 TO NPU<br>SET VOLTAGE OF CPU AT cv1 (OR, SET FREQUENCY OF CPU AT cf1)<br>SET VOLTAGE OF GPU AT gv1 (OR, SET FREQUENCY OF GPU AT gf1)<br>SET VOLTAGE OF NPU AT nv2 (OR, SET FREQUENCY OF NPU AT nf2) |
| ... | ... |
| $A_{N2}$ | ALLOCATE DNN6 TO CPU<br>ALLOCATE DNN5 TO GPU<br>ALLOCATE heavy DNN1, heavy DNN2, DNN3, DNN4 TO NPU<br>SET VOLTAGE OF CPU AT cvX (OR, SET FREQUENCY OF CPU AT cfX)<br>SET VOLTAGE OF GPU AT gvY (OR, SET FREQUENCY OF GPU AT gfY)<br>SET VOLTAGE OF NPU AT nvZ (OR, SET FREQUENCY OF NPU AT nfZ) |

# FIG. 12

S1201 $\longrightarrow$ if $R_{latency}$ > Latency Constraint

S1202 $\longrightarrow$ $\quad$ R = Latency Constraint − $R_{latency}$

S1203 $\longrightarrow$ if $R_{accuracy}$ < Accuracy Constraint

S1204 $\longrightarrow$ $\quad$ R = R + $R_{accuracy}$ − 100

S1205 $\longrightarrow$ if $R_{temp}$ > Threshold Temperature

S1206 $\longrightarrow$ $\quad$ R = R + Threshold Temperature − $R_{temp}$

S1207 $\longrightarrow$ R = R − $R_{energy}$ + a$R_{latency}$ + b$R_{accuracy}$ − c$R_{temp}$

# FIG. 13

SELECT CURRENT STATE CORRESPONDING TO STATE OF
SYSTEM FROM PLURALITY OF PRESET STATES ——S1301

SELECT ACTION HAVING MAXIMUM QUALITY IN
CURRENT STATE, FROM PLURALITY OF
PRESET ACTIONS HAVING PRESET QUALITY ——S1302

RESPECTIVELY ALLOCATE PLURALITY OF
DEEP NEURAL NETWORKS TO PLURALITY OF
PROCESSING UNITS BY PERFORMING SELECTED ACTION ——S1303

CALCULATE REWARD BASED ON WHETHER PROCESS OF
PLURALITY OF DEEP NEURAL NETWORKS BY ALLOCATED
PLURALITY OF PROCESSING UNITS HAS BEEN PERFORMED TO
SATISFY PRESET CONSTRAINTS ——S1305

UPDATE QUALITY OF ACTION SELECTED IN
CURRENT STATE BY USING REWARD ——S1306

# FIG. 14

SELECT CURRENT STATE CORRESPONDING TO
STATE OF SYSTEM FROM PLURALITY OF PRESET STATES — S1401

SELECT ACTION HAVING MAXIMUM QUALITY IN
CURRENT STATE, FROM PLURALITY OF
PRESET ACTIONS HAVING PRESET QUALITY — S1402

RESPECTIVELY ALLOCATE PLURALITY OF
DEEP NEURAL NETWORKS TO PLURALITY OF
PROCESSING UNITS BY PERFORMING SELECTED ACTION — S1403

SET AT LEAST ONE OF VOLTAGE AND FREQUENCY OF
EACH OF PLURALITY OF PROCESSING UNITS AS
PRESET VALUE BY PERFORMING SELECTED ACTION — S1404

CALCULATE REWARD BASED ON WHETHER PROCESS OF
PLURALITY OF DEEP NEURAL NETWORKS BY ALLOCATED
PLURALITY OF PROCESSING UNITS HAS BEEN PERFORMED
TO SATISFY PRESET CONSTRAINTS — S1405

UPDATE QUALITY OF ACTION SELECTED IN
CURRENT STATE BY USING REWARD — S1406

# FIG. 15

SELECT PARTICULAR STATE CORRESPONDING TO STATE OF SYSTEM INCLUDING PLURALITY OF PROCESSING UNITS FROM PLURALITY OF PRESET STATES ── S1501

SELECT PARTICULAR ACTION HAVING MAXIMUM QUALITY IN PARTICULAR STATE FROM PLURALITY OF PRESET ACTIONS HAVING PRESET QUALITY ── S1502

RESPECTIVELY ALLOCATE PLURALITY OF DEEP NEURAL NETWORKS TO PLURALITY OF PROCESSING UNITS BY PERFORMING PARTICULAR ACTION ── S1503

# FIG. 16

SELECT PARTICULAR STATE CORRESPONDING TO
STATE OF SYSTEM INCLUDING PLURALITY OF PROCESSING — S1601
UNITS FROM PLURALITY OF PRESET STATES

SELECT PARTICULAR ACTION HAVING MAXIMUM QUALITY IN
PARTICULAR STATE FROM PLURALITY OF — S1602
PRESET ACTIONS HAVING PRESET QUALITY

RESPECTIVELY ALLOCATE PLURALITY OF
DEEP NEURAL NETWORKS TO PLURALITY OF — S1603
PROCESSING UNITS BY PERFORMING PARTICULAR ACTION

SET AT LEAST ONE OF VOLTAGE AND FREQUENCY OF
EACH OF PLURALITY OF PROCESSING UNITS AS — S1604
PRESET VALUE BY PERFORMING PARTICULAR ACTION

# FIG. 17

## EUROPEAN SEARCH REPORT

**Application Number**

EP 24 15 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUNG GEUN KIM ET AL: "AutoScale: Optimizing Energy Efficiency of End-to-End Edge Inference under Stochastic Variance", ARXIV.ORG, CORNELL UNIVERSITY LIBRARY, 201 OLIN LIBRARY CORNELL UNIVERSITY ITHACA, NY 14853, 6 May 2020 (2020-05-06), XP081669407, | 1-9, 11-15 | INV. G06N3/063 G06N3/092 G06N20/00 |
| Y | * the whole document * | 10 | |
| X | MA LIXIAN ET AL: "WidePipe: High-Throughput Deep Learning Inference System on a Cluster of Neural Processing Units", 2021 IEEE 39TH INTERNATIONAL CONFERENCE ON COMPUTER DESIGN (ICCD), IEEE, 24 October 2021 (2021-10-24), pages 563-566, XP034055745, DOI: 10.1109/ICCD53106.2021.00091 [retrieved on 2021-12-08] | 1,12,15 | |
| A | * Sections I, III, IV, Figure 3 * | 2-11,13, 14 | **TECHNICAL FIELDS SEARCHED (IPC)** |
| | -/-- | | G06N |

The present search report has been drawn up for all claims

| Place of search | Date of completion of the search | Examiner |
|---|---|---|
| The Hague | 11 June 2024 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 15 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG KAICHENG ET AL: "Machine Learning-Based Temperature Prediction for Runtime Thermal Management Across System Components", IEEE TRANSACTIONS ON PARALLEL AND DISTRIBUTED SYSTEMS, [Online] vol. 29, no. 2, 1 February 2018 (2018-02-01), pages 405-419, XP093171746, USA ISSN: 1045-9219, DOI: 10.1109/TPDS.2017.2732951 Retrieved from the Internet: URL:https://ieeexplore.ieee.org/stampPDF/g etPDF.jsp?tp=&arnumber=7995115&ref=aHR0cHM 6Ly9pZWVleHBsb3JlLmllZWUub3JnL2RvY3VtZW50L zc5OTUxMTU=> [retrieved on 2024-06-07] | 10 | |
| A | * Sections 1, 5.5, 7 * | 1-9, 11-15 | |
| | ----- | | TECHNICAL FIELDS SEARCHED (IPC) |

The present search report has been drawn up for all claims

| Place of search | Date of completion of the search | Examiner |
|---|---|---|
| The Hague | 11 June 2024 | Efthymiadis, K |

EPO FORM 1503 03.82 (P04C01)